# EUROPÄISCHE PATENTANMELDUNG

(11) **EP 0 776 795 A2**
(43) Veröffentlichungstag der Anmeldung: **04.06.1997**
(21) Anmeldenummer: 96119034.5
(22) Anmeldetag: 28.11.1996
(51) Int. Cl.: B60R 21/26

(54) **Vorrichtung zum Aufblasen eines Airbags**

(30) Priorität: 02.12.1995 DE 19545052
(71) Anmelder: MST Automotive GmbH Automobil-Sicherheitstechnik, 63743 Aschaffenburg (DE)
(72) Erfinder: Moser, Franz, Dr., 2552 Hirtenberg (AT)
(74) Vertreter: Fuchs, Luderschmidt & Partner

(57) **Zusammenfassung**

Die Erfindung geht aus von einer Vorrichtung zum schnellen Aufblasen eines Airbags mit einem Druckgasbehälter (1), der eine mit einer Berstscheibe (2) verschlossene Austrittsöffnung (3) aufweist, und einem Treibsatzbehälter (4), dessen Inhalt (5) bei Zündung zur Erzeugung eines Treibgases und zur Öffnung des Druckgasbehälters (1) benutzt wird.

Bekannte Vorrichtungen dieser Art sind konstruktiv kompliziert und fertigungstechnisch sehr aufwendig.

Vorgeschlagen wird eine Vorrichtung, die gekennzeichnet ist durch ein Gehäuse (6) mit einer ersten Ausnehmung (7) zur Befestigung des Druckgasbehälters (1), einer zweiten, axial gegenüberliegenden Ausnehmung (8) zur Befestigung des Treibsatzbehälters (4) und einer dazwischen angeordneten Mischkammer (9) mit einer Gasauslaßöffnung (10) zum Airbag, wobei die Ausnehmung (7) wie auch die axial gegenüberliegende Ausnehmung (8) einen Auslaß (11, 14) zur Mischkammer (9) aufweist und letztere (14) mit einer Kalotte (12) aus duktilem Material verschlossen ist, das bei einer Zündung des Treibsatzes (5) kugelartig verformt und gegen die Berstscheibe (2) geschleudert wird, wodurch letztere zerstört und die Auslaßöffnung (3) des Druckgasbehälters (1) freigegeben wird.

## Beschreibung

Die Erfindung betrifft eine Vorrichtung zum schnellen Aufblasen eines Airbags mit einem Druckgasbehälter, der eine mit einer Berstscheibe verschlossene Austrittsöffnung aufweist, und einem Treibsatzbehälter, dessen Inhalt bei Zündung zur Erzeugung eines Treibgases und zur Öffnung des Druckgasbehälters benutzt wird.

Vorrichtungen dieser Art sind aus der EP 0464 189 B1 und der EP 0554 919 B1 bekannt. Dabei ist der Druckgasbehälter kreisringförmig mit einem zentralen Gehäuseteil ausgebildet, das eine zur Mittelachse des Druckgasbehälters koaxiale, nach unten geöffnete Ausnehmung mit Gewinde zum Einschrauben eines Treibsatzbehälters aufweist. Die Ausnehmung ist über eine zentrale Bohrung mit einer Mischkammer verbunden, wobei die Bohrung einen kleineren Durchmesser aufweist als die Ausnehmung, so daß im zentralen Gehäuseteil ein umlaufender Anschlag gebildet wird, an dem der Treibsatzbehälter in montiertem Zustand stirnseitig anliegt. Oberhalb des Anschlags befindet sich die Mischkammer mit Durchlässen zum ringförmigen Druckgasbehälter. Die die Mischkammer bildende Gehäusewandung endet oben mit einem umlaufenden, kreisförmigen Rezeß. Die Berstscheibe besteht einstückig aus einem rohrförmigen Teil und einem scheibenförmigen Teil mit größerem Durchmesser. Sie wird in das zentrale Gehäuseteil so eingesetzt, daß das untere Ende des rohrförmigen Teils in die zentrale Bohrung über der Ausnehmung eingreift und der Rand des scheibenförmigen Teils in dem Rezeß am oberen Ende der Mischkammer befestigt ist. Die Berstscheibe dient sowohl zum Verschließen des Druckgasbehälters als auch zum Verschließen der Ausnehmung für den Treibsatzbehälter. Nahe dem Verbindungsbereich zwischen rohrförmigen und scheibenförmigen Teil der Berstscheibe ist am rohrförmigen Teil eine außen umlaufende Kerbe als erste Sollbruchstelle vorgesehen. Eine weitere Kerbe verläuft kreisringförmig im Randbereich auf der Oberseite des scheibenförmigen Teils und bildet eine zweite Sollbruchstelle.

Beim Zünden des Treibsatzes wird der zentrale Bereich der Berstscheibe längs der beiden Sollbruchstellen abgetrennt, womit gleichzeitig die Wege zum Ausströmen des Druckgases und des beim Zünden entstehenden Treibgases in den Airbag freigegeben werden.

Diese Ausführungsform der Berstscheibe und die davon abhängige gleichzeitige Freigabe der beiden für das Füllen des Airbags benötigten Gaskomponenten hat sich für bestimmte Anwendungszwecke, insbesondere für in Lenkräder einzubauende Airbags durchaus bewährt und wird in großen Stückzahlen hergestellt. Sie ist aber verhältnismäßig kompliziert aufgebaut und erfordert einen erheblichen Fertigungsaufwand. Sie setzt auch eine bestimmte Form des Druckgasbehälters voraus, die nur bei Lenkradairbags vorteilhaft ist, für andere Anwendungszwecke jedoch keineswegs ideal. Als Hauptnachteil wird die gemeinsame Berstscheibe für das Verschließen der beiden Zugänge zum Mischraum angesehen, die mit sehr engen Fertigungstoleranzen hergestellt werden muß, wenn sie einerseits die doppelte Abdichtfunktion erfüllen und andererseits in ihrer Restfestigkeit präzise Sollbruchstellen aufweisen soll.

Es besteht daher die Aufgabe, ausgehend von einem Druckgasbehälter und einem Treibsatzbehälter, eine Vorrichtung der eingangs vorgenannten Art vorzuschlagen, die weniger kompliziert ist als die aus dem Stand der Technik bekannten Vorrichtungen und die eine leichtere Anpassung an verschiedene Einbauverhältnisse ermöglicht. Insbesondere soll eine deutlich preisgünstigere Berstscheibe zur Verfügung gestellt werden.

Zur Lösung dieser Aufgabe wird erfindungsgemäß eine Vorrichtung vorgeschlagen, die gekennzeichnet ist durch ein Gehäuse mit einer ersten Ausnehmung zur Befestigung des Druckgasbehälters, einer zweiten, axial gegenüberliegenden Ausnehmung zur Befestigung des Treibsatzbehälters und einer dazwischen angeordneten Mischkammer mit einer Gasauslaßöffnung zum Airbag, wobei die Ausnehmung für den Druckgasbehälter wie auch die axial gegenüberliegende Ausnehmung für den Treibsatzbehälter einen Auslaß zur Mischkammer aufweist und letztere mit einer Kalotte aus duktilem Material verschlossen ist, das bei einer Zündung des Treibsatzes kugelartig verformt und gegen die Berstscheibe geschleudert wird, wodurch letztere zerstört und die Auslaßöffnung des Druckgasbehälters freigegeben wird.

Der Erfindung liegt die Erwägung zugrunde, daß man die Öffnung zwischen der Ausnehmung für den Treibsatzbehälter und der Mischkammer nicht zwingend druckdicht verschließen muß und daß man sich wesentlich größere Fertigungstoleranzen erlauben kann, wenn die Berstscheibe "aufgeschossen" wird. Außerdem kann man nunmehr eine einfache, kreisförmige Berstscheibe verwenden, die sich äußerst preiswert und hinsichtlich ihrer Abmessungen sehr exakt herstellen läßt, zumal nur noch Durchmesser, Dicke und Materialqualität als Parameter zu berücksichtigen sind. Damit ist die wohl einfachste Form einer Berstscheibe für Vorrichtungen der gattungsmäßigen Art verfügbar gemacht worden.

Diese Vorteile werden keineswegs mit einer Komplizierung des Treibsatzes erkauft. Dieser ist vielmehr ebenfalls denkbar einfach und mit pyrotechnischen Grundkenntnissen leicht beherrschbar. Der Treibsatz ist so aufgebaut, daß seine Druckenergie vornehmlich in Richtung Berstscheibe wirkt. Die als Verschluß und Geschoß vorgesehene Kalotte ist einfach herzustellen und erfordert keine engen Fertigungstoleranzen.

Schließlich kann auch ein wesentlich einfacheres und fertigungstechnisch weniger aufwendiges Gehäuse verwendet werden. Im einfachsten Fall kann es aus einem rotationssymmetrischen Teil bestehen, das - abgesehen von dem Auslaß zum Airbag - mit zwei Maschineneinspannungen drehtechnisch herstellbar ist. Andererseits sind selbstverständlich auch andere Gehäuseformen leicht zu realisieren, wenn es die Einbauverhältnisse erfordern. Wichtig ist nur, daß die Berstscheibe in der Wirkungsachse des Treibsatzes liegt.

Vorteilhafte Ausgestaltungen des Erfindungsgedankens sind in den Ansprüchen 2 bis 10 beschrieben. Weitere Einzelheiten werden anhand der in den Figuren 1 bis 4 dargestellten Ausführungsbeispiele näher erläutert. Es zeigen:
- Fig.1: einen Längsschnitt durch eine erste Ausführungsform des Erfindungsgedankens,
- Fig.2: einen Längsschnitt durch einen Teil einer zweiten Ausführungsform,
- Fig.3: einen Längsschnitt durch einen Teil einer dritten Ausführungsform und
- Fig.4: einen Längsschnitt durch einen Teil einer vierten Ausführungsform.

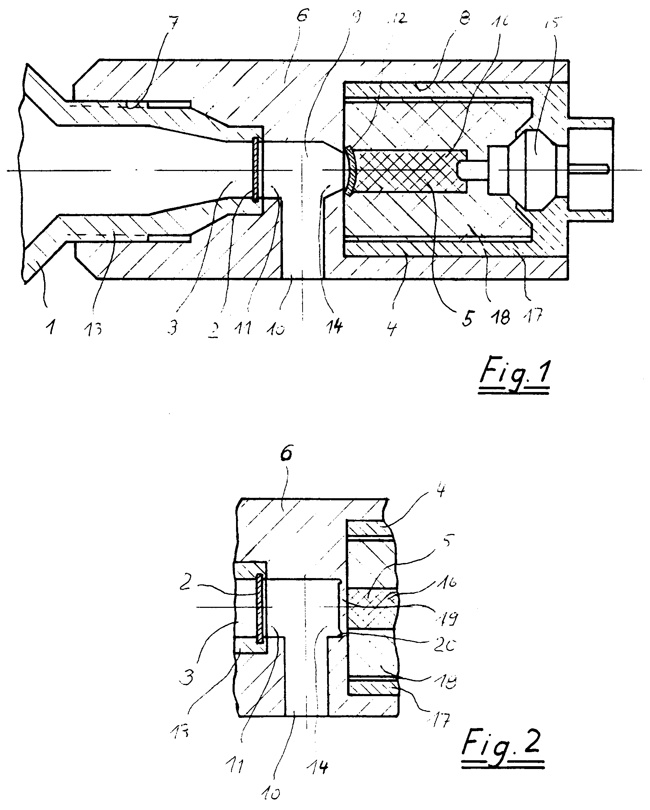

Das in Fig. 1 dargestellte Gehäuse 6 für die erfindungsgemäße Vorrichtung hat eine erste Ausnehmung 7 zum Einschrauben eines Druckgasbehälters 1 und eine zweite Ausnehmung 8 zur Aufnahme eines Treibsatzbehälters 4, der ebenfalls eingeschraubt oder aber anderweitig darin befestigt werden kann. Der Druckgasbehälter 1 hat ein flaschenhalsartiges Behälterteil 13, das die Austrittsöffnung 3 für das Druckgas umschließt und endseitig mit der Berstscheibe 2 abgeschlossen ist.

Koaxial zur Ausnehmung 7 ist eine Ausnehmung 8 für den Treibsatzbehälter 4 vorgesehen, der einen Treibsatz 5 in Form eines Preßlings 16 aus hochenergetischem Material enthält. Der Treibsatzbehälter 4 enthält ferner eine elektrische Zündvorrichtung 15 und eine Hülle 18 aus einem Material geringer Dichte sowie eine Kalotte 12 aus duktilem Material. Das Material geringer Dichte schützt die Wandung 17 des Treibsatzgehäuses 4 vor der beim Zünden ausgelösten Druckwelle und sorgt dafür, daß die Druckenergie im wesentlichen nur in Richtung auf die Berstscheibe 2 wirkt. Das duktile Material der Kalotte 12 wird durch die Druckwelle zu einer Kugelform zusammengedrückt und fliegt dann als Geschoß auf die Berstscheibe zu, um sie zu zerstören und den Weg für das Ausströmen des Druckgases freizugeben.

Dabei mischen sich die aus dem Auslaß 14 ausströmenden heißen Gase des Treibsatzes 5 mit dem sich bei der Expansion abkühlenden, aus dem Auslaß 11 ausströmenden Druckgas in der Mischkammer 9, bevor das Gasgemisch über die Gasauslaßöffnung 10 in den (nicht dargestellten) Airbag abströmt. Da beide Gasströme frontal aufeinandertreffen, ist eine gute Durchmischung gewährleistet, so daß - anders als gelegentlich bei herkömmlichen Vorrichtungen - keine Eiskristalle oder heißen Strähnen beim Einströmen in den Airbag auftreten. Der elektrische Anschluß und der Übergang zum Airbag sind nur schematisch dargestellt, weil insoweit auf bekannte Bauformen zurückgegriffen werden kann bzw. weil es dem Fachmann ohne weiteres möglich ist, die erfindungsgemäße Vorrichtung in diesen Teilen an die jeweiligen Erfordernisse anzupassen.

Die Ausführungsform gemäß Fig. 2 unterscheidet sich von der Ausführungsform gemäß Fig. 1 nur dadurch, daß statt einer Kalotte 12 ein die Ausnehmung 8 für den Treibsatzbehälter 4 abschließendes Gehäusewandteil 19 als "Geschoß" verwendet wird, das über eine kreisförmige Sollbruchstelle 20 mit dein übrigen Gehäuse 6 verbunden ist. Diese Alternative kommt mit einem Bauteil weniger aus und ermöglicht eine einfachere Form des Preßlings 16 für den Treibsatz 5. Die übrigen Bezugsziffern haben die gleiche Bedeutung wie in Fig. 1. Zur Vermeidung von Wiederholungen wird auf die entsprechenden Beschreibungsteile verwiesen.

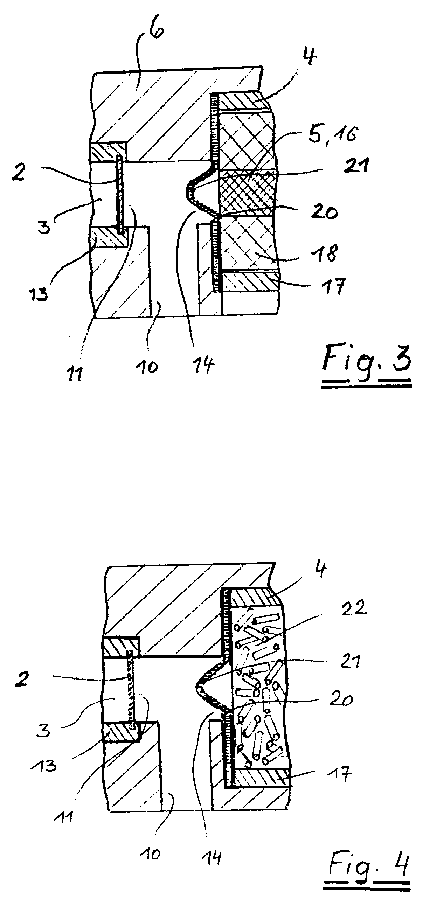

Bei der Ausführungsform gemäß Fig. 3 ist zwischen der Ausnehmung 8 für den Treibsatzbehälter 4 und der Mischkammer 9 eine Abschlußscheibe 23 mit einem kegelartig vorspringenden, von einer Sollbruchstelle 20 umgebenen Mittelteil 21 vorgesehen, die sich leichter herstellen läßt, als ein Gehäusewandteil 19. Außerdem hat man dabei die Möglichkeit, für die Abschlußscheibe 23 ein anderes Material zu wählen, als für das Gehäuse 6.

Die Ausführungsform gemäß Fig. 4 unterscheidet sich von der gemäß Fig. 3 nur durch die Wahl bzw. Anordnung des pyrotechnischen Materials. Statt eines Preßlings 16 mit einer Hülle 18 ist ein granuliertes Treibmittel 22 vorgesehen, das sich hinsichtlich Korngröße und Mischung sehr gut an die jeweiligen Anforderungen anpassen läßt.

## Patentansprüche

1. Vorrichtung zum schnellen Aufblasen eines Airbags mit einem Druckgasbehälter (1), der eine mit einer Berstscheibe (2) verschlossene Austrittsöffnung (3) aufweist, und einem Treibsatzbehälter (4), dessen Inhalt (5) bei Zündung zur Erzeugung eines Treibgases und zur Öffnung des Druckgasbehälters (1) benutzt wird, gekennzeichnet durch ein Gehäuse (6) mit einer ersten Ausnehmung (7) zur Befestigung des Druckgasbehälters (1), einer zweiten, axial gegenüberliegenden Ausnehmung (8) zur Befestigung des Treibsatzbehälters (4) und einer dazwischen angeordneten Mischkammer (9) mit einer Gasauslaßöffnung (10) zum Airbag, wobei die Ausnehmung (7) wie auch die axial gegenüberliegende Ausnehmung (8) einen Auslaß (11, 14) zur Mischkammer (9) aufweist und letztere (14) mit einer Kalotte (12) aus duktilem Material verschlossen ist, das bei einer Zündung des Treibsatzes (5) kugelartig verformt und gegen die Berstscheibe (2) geschleudert wird, wodurch letztere zerstört und die Auslaßöffnung (3) des Druckgasbehälters (1) freigegeben wird.

2. Vorrichtung nach Anspruch 1, dadurch gekennzeichnet, daß die Auslaßöffnung (3) des Druckgasbehälters (1) von einem flaschenhalsartigen Behälterteil (13) gebildet wird, das in die Ausnehmung (7) des Gehäuses (6) eingeschraubt ist.

3. Vorrichtung nach einem Ansprüche 1 oder 2, dadurch gekennzeichnet, daß die Berstscheibe (3) am austrittsseitigen Ende des flaschenhalsartigen Behälterteils (13) befestigt ist.

4. Vorrichtung nach einem der Ansprüche 1 bis 3, dadurch gekennzeichnet, daß der Treibsatzbehälter (4) eine elektrische Zündvorrichtung (15) und einen Preßling (16) aus pyrotechnischem Material enthält.

5. Vorrichtung nach Anspruch 4, dadurch gekennzeichnet, daß zwischen dem Preßling (16) aus pyrotechnischem Material und der Wandung (17) des Treibsatzbehälters (4) eine Hülle (18) aus einem Material geringer Dichte angeordnet ist.

6. Vorrichtung nach Anspruch 1, jedoch mit der Maßgabe, daß statt einer Kalotte (12) zwischen der Ausnehmung (8) für den Treibsatzbehälter (4) und der Mischkammer (9) ein abschließendes Gehäusewandteil (19) mit Sollbruchstelle (20) angeordnet ist, das bei einer Zündung des Treibsatzes (5) herausgebrochen und gegen die Berstscheibe (3) geschleudert wird.

7. Vorrichtung nach Anspruch 1, jedoch mit der Maßgabe, daß statt einer Kalotte (12) zwischen der Ausnehmung (8) für den Treibsatzbehälter (4) und der Mischkammer (9) eine Abschlußscheibe (23) mit einem kegelartig vorspringenden, von einer Sollbruchstelle (20) umgebenen Mittelteil (21) vorgesehen ist.

8. Vorrichtung nach einem der Ansprüche 5 bis 7, dadurch gekennzeichnet, daß der Preßling (16) aus pyrotechnischem Material ohne Zwischenlager von Material geringer Dichte bis unmittelbar an die Kalotte (12), an das abschließende Gehäusewandteil (19) bzw. an die Abschlußscheibe (23) heranreicht.

9. Vorrichtung nach einem der Ansprüche 5 bis 8, jedoch mit der Maßgabe, daß anstelle eines Preßlings (16) aus pyrotechnischem Material und einer Hülle (18) aus einem Material geringer Dichte ein granuliertes Treibmittel (22) vorgesehen ist.

10. Vorrichtung nach einem der Ansprüche 1 bis 9, dadurch gekennzeichnet, daß zwischen Mischkammer (9) und Airbag Mittel zum Zurückhalten von ggf. anfallenden Bruchstücken der Kalotte (12), des Gehäusewandteils (19) der Abschlußscheibe (23) und/oder der Berstscheibe (2) vorgesehen sind.
